# EUROPEAN PATENT APPLICATION

(11) **EP 4 369 464 A1**
(43) Date of publication of application: **15.05.2024**
(21) Application number: 22952186.9
(22) Date of filing: 25.07.2022
(51) Int. Cl.: H01M 10/0587

(54) **SEPARATOR, SECONDARY BATTERY, BATTERY MODULE, BATTERY PACK, AND ELECTRIC DEVICE**

(71) Applicant: Contemporary Amperex Technology Co., Limited, Ningde, Fujian 352100 (CN)
(72) Inventor: HUANG, Caixia, Ningde, Fujian 352100 (CN); SHE, Yangfan, Ningde, Fujian 352100 (CN); GE, Shaobing, Ningde, Fujian 352100 (CN); LIANG, Jingbing, Ningde, Fujian 352100 (CN); CHEN, Wei, Ningde, Fujian 352100 (CN); TANG, Minghao, Ningde, Fujian 352100 (CN)
(74) Representative: Ran, Handong
(86) International application number: PCT/CN2022/107600
(87) International publication number: WO 2024/020717

(57) **Abstract**

The present application relates to a separator, comprising a base film, and a coating arranged on an edge portion of the base film. After the separator, a positive electrode plate and a negative electrode plate are assembled into a cell, an electrolyte storage structure is formed between the separator and the positive electrode plate and/or between the separator and the negative electrode plate, thereby improving the electrolyte storage capacity; and the coating acts as a barrier and can prevent the electrolyte from being squeezed out, improving the electrolyte retention capacity of the cell. In addition, the presence of the electrolyte storage structure allows for the expansion stress of the cell to be released to a certain extent during a cycle process, so as to reduce squeezing forces between the electrode plates and the separator and further reduce the amount of the electrolyte squeezed out. The present application further relates to a secondary battery using the separator, a battery module, a battery pack and an electric device.

## Description

### TECHNICAL FIELD

The present disclosure relates to the technical field of secondary batteries, and in particular, to a separator, a secondary battery, a battery module, a battery pack, and an electric device.

### BACKGROUND

With the development of technologies, clean energy sources such as batteries gradually replace the traditional petroleum energy source to provide power for various scenarios. However, the electrolytic solution inside the battery cell may be squeezed out during charging and discharging, such that the electrolytic solution inside the battery cell is insufficient, thereby seriously affecting the cycle performance and life of the battery cell.

Therefore, it is required to reduce the extrusion amount of the electrolytic solution inside the battery cell and increase the liquid retention capacity of the battery cell during a cycle process.

### SUMMARY

In view of the problems existing in the background, the present disclosure provides a separator that is capable of reducing the extrusion amount of the electrolytic solution inside the battery cell and increasing the liquid retention capacity of the battery cell during a cycle process.

The first aspect of the present disclosure provides a separator including a base film and a coating layer. The base film has an upper surface and a lower surface. The base film has a first direction. The upper surface includes a first edge portion and a second edge portion in the first direction. The lower surface includes a third edge portion and a fourth edge portion in the first direction. The coating layer is provided at at least one of the first edge portion, the second edge portion, the third edge portion, and the fourth edge portion.

In the technical solutions of the embodiments of the present disclosure, the separator includes the base film and the coating layer provided at the edge portions of the base film. After the separator and the positive and negative electrode plates form a battery cell, a liquid storage structure is formed between the separator and the positive electrode plate and/or between the separator and the negative electrode plate to improve the capacity of storing an electrolytic solution. The coating layer functions as a barrier to prevent the electrolytic solution from being squeezed out and improve the liquid retention capacity of the battery cell. In addition, due to the existence of the liquid storage structure, the expansion stress can be released to an extent during the cycle process of the battery cell, to reduce the extrusion force between the electrode plate and the separator, thereby further reducing the extrusion amount of the electrolytic solution.

Furthermore, when the separator is used in a lithium-ion battery, the liquid retention capacity of the battery cell can be improved such that the electrolytic solution inside the battery cell is sufficient. Accordingly, the lithium ions can be effectively transported during the cycle process, the lithium precipitation phenomenon can be avoided from being occurred on the battery cell, and the cycle performance and lifespan of the battery cell can be improved. In particular, the lithium precipitation problem at the edge of the negative electrode plate can be solved, and the electrolytic solution at the edge portion of the negative electrode plate can be avoided from being squeezed out.

In some embodiments, according to the first aspect, a first embodiment of the first aspect is provided. The base film has a cuboid structure when unrolled to be flat, and the first direction is a width direction of the base film.

In the above configuration, the first direction is configured to be the width direction of the base film, and the coating layer is arranged at the edge portions of the base film in the width direction. This arrangement is beneficial to ensure that the edges of the electrode plates retain the electrolytic solution continuously during the cycle process of the battery cell, thereby ensuring the effective transport of the lithium ions. Meanwhile, the storage capacity of the electrolytic solution inside the battery cell is improved, the extrusion of the electrolytic solution is reduced during the cycle process, and the transpor kinetics requirements of the lithium ions inside the battery cell are ensured.

In some embodiments, according to the first aspect, a second embodiment of the first aspect is provided. Widths of the first edge portion, the second edge portion, the third edge portion and the fourth edge portion are independent of one another, and each of the widths of the first edge portion, the second edge portion, the third edge portion, and the fourth edge portion ranges from 1% to 20% of a width of the separator.

In the above configuration, the widths of the edge portions are optimized such that it is advantageous to form a liquid storage structure with a relatively large space between the separator and the positive electrode plate and/or between the separator and the negative electrode plate, to improve the liquid retention capacity of the battery cell.

In some embodiments, according to the first aspect, a third embodiment of the first aspect is provided. The base film further has a second direction, and the second direction is a length direction of the base film. The coating layer extends in the length direction of the base film, and has a length that is equal to a length of the base film.

In the above configuration, the coating layer extends continuously in the length direction of the base film, and the base film is coated with the coating layer along the entire length, such that it is possible to maximally prevent the electrolytic solution from being extruded due to the pressure.

In some embodiments, according to the first aspect, a fourth embodiment of the first aspect is provided. Number of coating layer provided at the first edge portion, the second edge portion, the third edge portion, and the fourth edge portion are independent of one another. The coating layer provided at each of the first edge portion, the second edge portion, the third edge portion, and the fourth edge portion includes one coating layer.

In the above configuration, the number of the coating layer on each of the edge portions is configured to be one to stabilize the processing of the separator, reduce the cost, and improve the industrial feasibility.

In some embodiments, according to the first aspect, a fifth embodiment of the first aspect is provided. A width of the coating layer provided at the first edge portion is equal to a width of the first edge portion. A width of the coating layer provided at the second edge portion is equal to a width of the second edge portion. A width of the coating layer provided at the third edge portion is equal to a width of the third edge portion. A width of the coating layer provided at the fourth edge portion is equal to a width of the fourth edge portion.

In the above configuration, when only one coating layer is provided at one of the edge portions, the width of the coating layer is equal to the width of a corresponding one of the edge portions. In this way, the entire edge portion is coated with the coating layer, which can increase the overall strength of the coating layer and prevent the risk of deformation and cracking due to the extrusion when the coating layer is too narrow.

In some embodiments, according to the first aspect, a sixth embodiment of the first aspect is provided. Number of coating layer provided at the first edge portion, the second edge portion, the third edge portion, and the fourth edge portion are independent of one another. The coating layer provided at each of the first edge portion, the second edge portion, the third edge portion, and the fourth edge portion includes two to five coating layers. The plurality of coating layers provided at each of the first edge portion, the second edge portion, the third edge portion, and the fourth edge portion are arranged side by side in the width direction of the base film and in non-connection with each other.

In the above configuration, the plurality of coating layers is correspondingly provided at a respective one of the edge portions, and a gap is formed between the plurality of coating layers, which are beneficial to increase the storage amount of the electrolytic solution at the edge portions, to effectively solve the problem of lithium precipitation at the edge of the negative electrode plate due to the insufficient electrolytic solution. In addition, a total width of the plurality of coating layers is less than the width of the corresponding edge portion, to reduce the amount of the coating material and reduce the production cost. However, the number of the coating layers on each of the edge portions should not be too many, otherwise the processing of the separator is complex, the processing stability is redused, the production cost is increased, and the industrial applicability is decreased.

In some embodiments, according to the first aspect, a seventh embodiment of the first aspect is provided. The plurality of coating layers provided at each of the first edge portion, the second edge portion, the third edge portion, and the fourth edge portion are arranged side by side at a same interval, and each of the plurality of coating layers has a same coating width.

In the above configuration, the arrangement of the coating layers on the edge portions is optimizd such that the coating layers are arranged orderly, regularly, controllably, and uniformly, to improve the processing stability of the separator.

In some embodiments, according to the first aspect, an eighth embodiment of the first aspect is provided. The coating layer is provided at the first edge portion and the second edge portion. Alternatively, the coating is provided at the third edge portion and the fourth edge portion. Alternatively, the coating layer is provided at the first edge portion and the third edge portion. Alternatively, the coating layer is provided at the second edge portion and the fourth edge portion. Alternatively, thecoating layer is provided at the first edge portion, the second edge portion, the third edge portion, and the fourth edge portion.

In the above configuration, the liquid retention capacity of the battery cell can be improved by optimizing the arrangement of the coating layers.

In some embodiments, according to the first aspect, a ninth example of the first aspect is provided. The coating layer has a thickness ranging from 0.5 µm to 5 µm.

In the above configuration, the liquid retention capacity of the battery cell can be improved by optimizing the thickness of the coating layer. When the coating layer is too thick, the gap between the electrode plates within the battery cell is too large, the transport path of the lithium ions increases significantly, and the kinetics of the lithium ions decreases. When the coating layer is too thin, the edge of the electrode plate has a weak capacity to prevent the electrolytic solution from being squeezed out during the cycle process of the battery cell, the internal liquid retention capacity of the battery cell is low, and the improvement in the cycle lifespan is insignificant.

In some embodiments, according to the first aspect, a tenth embodiment of the first aspect is provided. The coating layer is made of at least one of alumina, aramid, polyethylene oxide, polyacrylic acid, polyacrylate, polymethyl acrylate, polyvinylidene fluoride, polymethacrylic acid, polyethylacrylate, polyvinylidene fluoride, hexafluoropropylene copolymer, polypropylene, polyimide, polyacrylonitrile, lithium carboxymethyl cellulose, and styrene-butadiene rubber.

In the above configuration, the material of the coating layer can promote the infiltration of the electrolytic solution into the interior of the battery cell and has good conductivity. Moreover, the material of the coating layer can be excellently combined with the separator, excellently fit with the electrode plates, and improve the liquid retention capacity inside the battery cell.

The second aspect of the present disclosure provides a secondary battery. The battery cell includes a positive electrode plate, a negative electrode plate, and the separator described in the first aspect of the present disclosure. The separator is provided between the positive electrode plate and the negative electrode plate.

In the technical solutions of the embodiments of the present disclosure, since the separator of the first aspect of the present disclosure is used, the secondary battery of the present disclosure can reduce the extrusion amount of the electrolytic solution inside the battery cell during the cycle process, and improve the liquid retention capacity of the battery cell.

The third aspect of the present disclosure provides a battery module including the secondary battery of the second aspect of the present disclosure.

In the technical solutions of the embodiments of the present disclosure, since the separator of the first aspect of the present disclosure is used, the battery module of the present disclosure can reduce the extrusion amount of the electrolytic solution inside the battery cell during the cycle process, and improve the liquid retention capacity of the battery cell.

The fourth aspect of the present disclosure provides a battery pack including the secondary battery of the second aspect of the present disclosure or the battery module of the third aspect of the present disclosure.

In the technical solutions of the embodiments of the present disclosure, since the separator of the first aspect of the present disclosure is used, the battery pack of the present disclosure can reduce the extrusion amount of the electrolytic solution inside the battery cell during the cycle process, and improve the liquid retention capacity of the battery cell.

The fifth aspect of the present disclosure provides an electric device including at least one of the secondary battery of the second aspect of the present disclosure, the battery module of the third aspect of the present disclosure, or the battery pack of the fourth aspect of the present disclosure.

In the technical solutions of the embodiments of the present disclosure, since the separator of the first aspect of the present disclosure is used, the electric device of the present disclosure can reduce the extrusion amount of the electrolytic solution inside the battery cell during the cycle process, and improve the liquid retention capacity of the battery cell.

The above description is merely an overview of the technical solutions of the present disclosure, which can be carried out in accordance with the contents of the description in order to make the technical means of the present disclosure more clearly understood. In order to make the above and other objects, features, and advantages of the present disclosure more apparent, specific embodiments of the present disclosure are described below.

### BRIEF DESCRIPTION OF THE DRAWINGS

Various other advantages and benefits will become apparent to those skilled in the art upon reading the following detailed description of the preferred embodiments. The drawings are only for the purpose of illustrating the preferred embodiments and are not to be construed as limition to the present disclosure. Moreover, the same reference signs denote the same component throughout the drawings.
FIG. 1 is a schematic view showing a local structure of a base film of the present disclosure.
FIG. 2 is a schematic view showing a longitudinal section of a base film of the present disclosure.
FIG. 3 is a schematic view showing a local structure of a separator of the present disclosure.
FIGS. 4 to 7 are schematic views showing longitudinal sections of separators of the present disclosure.
FIG. 8 is a schematic view showing a longitudinal section of a local structure of a secondary battery of the present disclosure.
FIG. 9 is a schematic view showing a local structure of a secondary battery of the present disclosure.

### Reference signs:

100 base film; X first direction of the base film; Y second direction of the base film; 101 first edge portion; 102 second edge portion; 103 third edge portion; 104 fourth edge portion; 200 coating layer; 300 positive electrode plate; 400 negative electrode plate; and 500 liquid storage structure.

### DESCRIPTION OF EMBODIMENTS

The following will provide a detailed description of embodiments of the technical solution of the present disclosure in conjunction with the accompanying drawings. The following embodiments are only used to provide a clearer explanation of the technical solutions of the present disclosure, and therefore are only examples and cannot be used to limit the scope of the present disclosure.

Various structural schematic views according to the embodiments of the present disclosure are shown in the accompanying drawings. The figures are not drawn to scale, in which some details are enlarged and other details are possibly omitted for clarity. The shapes of various regions and layers shown in the figures as well as their relative sizes and positional relationships are only exemplary. In practice, there may be deviations due to manufacturing tolerances or technical limitations. Additionally, those skilled in the art can design regions or layers with different shapes, dimensions, and relative positions in accordance with actual requirments.

Unless otherwise defined, all technical and scientific terms used in the present disclosure have the same meaning as commonly understood by those skilled in the art of the present disclosure. The terms used in the description of the present disclosure are only for the purpose of describing specific embodiments and are not intended to limit the present disclosure. The terms "include" and "have" as well as any variations thereof in the specification, claims or the description of the accompanying drawings of the present disclosure are intended to cover non-exclusive inclusion.

In the description of the embodiments of the present disclosure, the technical terms "first", "second" and the like are only used to distinguish different objects and cannot be understood as indicating or implying relative importance or implying the quantity, specific order, or primary and secondary relationship of the indicated technical features. In the description of the embodiments of the present disclosure, the meaning of "a plurality of' refers to two or more, unless otherwise specifically defined.

The "embodiment" in the present disclosure means that a particular feature, structure, or characteristic described in connection with an embodiment may be included in at least one embodiment of the present disclosure. The appearances of this phrase in various positions in the specification are not necessarily all referring to the same embodiment, nor are independent or alternative embodiments mutually exclusive of other embodiments. Those skilled in the art can explicitly and implicitly understand that the embodiments described herein can be combined with other embodiments.

A term "and/or" in the present disclosure is merely an association relationship describing associated objects, and indicates that there may be three relationships. For example, A and/or B may indicate three cases as below: A exists alone, A and B exist at the same time, and B exists alone.

In the description of the embodiments of the present disclosure, the term "a plurality of' refers to two or more, which includes two.

In the description of the present disclosure, unless otherwise specified and limited, technical terms "mount", "communicate", "connect" and "attach" should be understood in a broad sense, for example, it may be fixedly connected or detachably connected, or integrally connected; it may be a mechanical connection or an electrical connection; and it may be directly connected or indirectly connected by means of an intermediate medium, and it may be communication of two internal elements or interaction relationship between two elements. For those skilled in the art, the specific meaning of the term in the present disclosure can be understood according to specific conditions.

With the development of technologies, clean energy sources such as batteries gradually replace the traditional petroleum energy source to provide power for various scenarios. However, the electrolytic solution inside the battery cell may be squeezed out during charging and discharging, such that the electrolytic solution inside the battery cell is insufficient, thereby seriously affecting the cycle performance and life of the battery cell. Therefore, it is required to reduce the extrusion amount of the electrolytic solution inside the battery cell and increase the liquid retention capacity of the battery cell during a cycle process.

Researchers have found that during the charging and discharging processes of lithium-ion batteries, since the cycle intercalating and deintercalating reactions occur on the positive electrode and negative electrode of the lithium ion, the electrode plates may expand. Due to the expansion force, an electrolytic solution inside an battery cell may be squeezed out, such that the electrolytic solution inside the battery cell is insufficient. The lithium ion transport is hindered in the cycle process, resulting in lithium precipitation in the battery cell, which seriously affects the cycle performance and lifespan of the battery cell.

In order to solve the above problems, the inventors have intensively studied and provided a separator, which includes a base film and at least one coating layer provided at an edge portion of the base film. After the separator is stacked with a positive electrode plate and a negative electrode plate or wound with a positive electrode plate and a negative electrode plate into a battery cell, a liquid storage structure is formed between the separator and the positive electrode plate and/or between the separator and the negative electrode plate to improve the capacity of storing the electrolytic solution. The coating layer functions as a barrier to prevent the electrolytic solution from being squeezed out and improve the liquid retention capacity of the battery cell. In addition, due to the existence of the liquid storage structure, the expansion stress can be released to an extent during the cycle process of the battery cell, to reduce the extrusion force between the electrode plate and the separator to further reduce the extrusion amount of the electrolytic solution.

The technical solutions described in the embodiments of the present disclosure are applicable to a separator, and also applicable to a secondary battery using the separator, a battery module using the secondary battery, a battery pack using the secondary battery or the battery module, and an electric device using at least one of the secondary battery, the battery module, and the battery pack.

The following will provide further explanation of the present disclosure in conjunction with specific drawings.

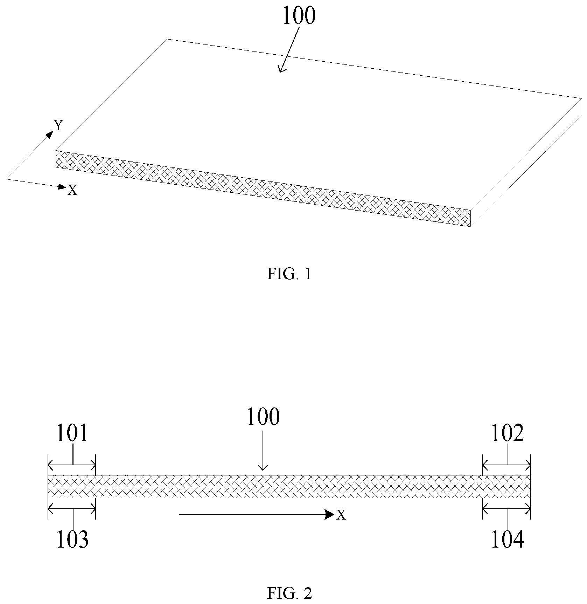

In the first aspect, according to some embodiments of the present disclosure with reference to FIGS. 1 to 7, the present disclosure provides a separator including a base film 100 and acoating layer 200. The base film 100 has an upper surface and a lower surface. The base film 100 has a first direction X. The upper surface includes a first edge portion 101 and a second edge portion 102 in the first direction X. The lower surface includes a third edge portion 103 and a fourth edge portion 104 in the first direction X. The coating layer 200 is provided on at least one of the first edge portion 101, the second edge portion 102, the third edge portion 103, and the fourth edge portion 104.

The separator is provided between a positive electrode plate and a negative electrode plate to have an isolating function, to prevent the positive electrode and negative electrode inside the battery from short circuit and allow ions to pass through. Furthermore, the separator function to retain the electrolytic solution.

Referring to FIG. 1, the base film 100 is a base structure of the separator. The kind of the base film 100 is not particularly limited in the present disclosure, and the base film 100 may be any base material used in existing batteries, such as polyethylene, polypropylene, polyvinylidene fluoride, and a multilayer composite film thereof, but is not limited thereto.

Referring to FIG. 2, the base film 100 has an upper surface and a lower surface. The upper surface includes a first edge portion 101 and a second edge portion 102 in the first direction X. The lower surface includes a third edge portion 103 and a fourth edge portion 104 in the first direction X. The "edge portions" refer to two end portions of the surfaces of the base film in the first direction.

In the technical solutions of the embodiments of the present disclosure, the separator includes the base film and the coating layer arranged at the edge portions of the base film. After the separator and the positive and negative electrode plates form a battery cell, a liquid storage structure is formed between the separator and the positive electrode plate and/or between the separator and the negative electrode plate to improve the capacity of storing the electrolytic solution. The coating layer functions as a barrier to prevent the electrolytic solution from being squeezed out and improve the liquid retention capacity of the battery cell. In addition, due to the existence of the liquid storage structure, the expansion stress can be released to an extent during the cycle process of the battery cell, to reduce the extrusion force between the electrode plate and the separator to further reduce the extrusion amount of the electrolytic solution.

In addition, when the separator is used in a lithium-ion battery, the liquid retention capacity of the battery cell can be improved such that the electrolytic solution inside the battery cell is sufficient. Accordingly, the lithium ions can be effectively transported during the cycle process, the lithium precipitation phenomenon can be avoided from being occurred on the battery cell, and the cycle performance and lifespan of the battery cell can be improved. In particular, the lithium precipitation problem at the edge of the negative electrode plate can be solved, and the electrolytic solution at the edge portion of the negative electrode plate can be avoided from being squeezed out.

In some embodiments, according to the first aspect, a first embodiment of the first aspect is provided. Referring to FIG. 1, the base film 100 has a cuboid structure when unrolled to be flat. The first direction X is a width direction of the base film 100.

In the above configuration, the first direction is configured to be the width direction of the base film, and the coating layer is arranged at the edge portions of the base film in the width direction. This arrangement is beneficial to ensure that the edges of the electrode plates retain the electrolytic solution continuously during the cycle process of the battery cell, thereby ensuring the effective transport of the lithium ions. Meanwhile, the storage capacity of the electrolytic solution inside the battery cell is improved, the extrusion of the electrolytic solution is reduced during the cycle process, and the transpor kinetics requirements of the lithium ions inside the battery cell are ensured.

In some embodiments, according to the first aspect, a second embodiment of the first aspect is provided. With reference to FIG. 2, widths of the first edge portion 101, the second edge portion 102, the third edge portion 103, and the fourth edge portion 104 are independent of one another, and each of the widths of the first edge portion 101, the second edge portion 102, the third edge portion 103, and the fourth edge portion 104 rangs from 1% to 20% of a width of the separator.

In the above configuration, the widths of the edge portions are optimized such that it is advantageous to form a liquid storage structure with a large space between the separator and the positive electrode plate and/or between the separator and the negative electrode plate, to improve the liquid retention capacity of the battery cell.

In some specific embodiments, the widths of the first edge portion 101, the second edge portion 102, the third edge portion 103 and the fourth edge portion 104, independent of one another, may be 1%, 2%, 3%, 4%, 5%, 6%, 7%, 8%, 9%, 10%, 11%, 12%, 13%, 14%, 15%, 16%, 17%, 18%, 19%, or 20% of the width of the separator. In an embodiment, the widths of the first edge portion 101, the second edge portion 102, the third edge portion 103 and the fourth edge portion 104 are independent of one another, and each of the widths ranges from 1% to 15%, 5% to 10%, 10% to 15%, or 5% to 15% of the width of the separator.

In some specific embodiments, the widths of the first edge portion, the second edge portion, the third edge portion and the fourth edge portion are equal.

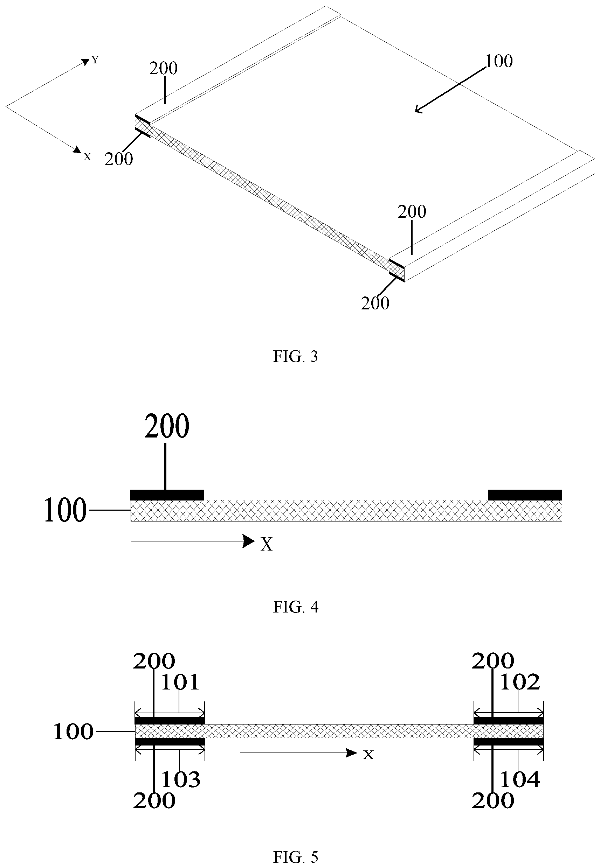

In some embodiments, according to the first aspect, a third embodiment of the first aspect is provided. Referring to FIG. 3, the base film further has a second direction Y, and the second direction Y is a length direction. The coating layer 200 extends along a length of the base film 100, and a length of the coating layer 200 is equal to the length of the base film 100.

In the above configuration, the coating layer 200 extends continuously in the length direction Y of the base film 100, and the base film 100 is coated with the coating layer 200 along the entire length, such that it is possible to maximally prevent the electrolytic solution from being extruded due to the pressure.

In some embodiments, according to the first aspect, a fourth embodiment of the first aspect is provided. Refer to FIGS. 4 and 5, the number of coating layers 200 on the first edge portion 101, the second edge portion 102, the third edge portion 103 and the fourth edge portion 104, independent of one another, may be one.

In the above configuration, the number of coating layers on each of the edge portions is configured to be one to stabilize the processing of the separator, reduce the cost, and improve the industrial feasibility.

In some embodiments, according to the first aspect, a fifth embodiment of the first aspect is provided. Referring to FIG. 5, a width of the coating layer 200 on the first edge portion 101 is equal to the width of the first edge portion 101, a width of the coating layer 200 on the second edge portion 102 is equal to the width of the second edge portion 102, a width of the coating layer 200 on the third edge portion 103 is equal to the width of the third edge portion 103, and a width of the coating layer 200 on the fourth edge portion 104 is equal to the width of the fourth edge portion 104.

In the above configuration, when only one coating layer 200 is provided at one of the edge portions, the width of the coating layer 200 is equal to the width of a corresponding one of the edge portions. In this way, the entire edge portion is coated with the coating layer, which can increase the overall strength of the coating layer and prevent the risk of deformation and cracking due to the extrusion when the coating layer is too narrow.

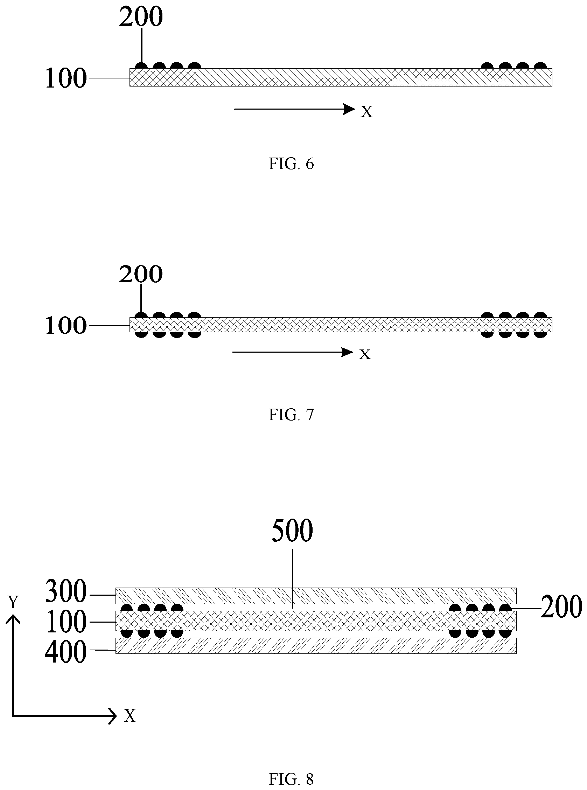

In some embodiments, according to the first aspect, a sixth embodiment of the first aspect is provided. With reference to FIGS. 6 and 7, the number of coating layers 200 on the first edge portion 101, the second edge portion 102, the third edge portion 103 and the fourth edge portion 104 are independent of one another and each are in a range of 2 to 5, and the coating layers 200 on each of the edge portions are arranged side by side in the width direction X of the base film 100, and are in non-connection with each other.

In the above configuration, a plurality of coating layers 200 is correspondingly provided at a respective one of the edge portions, and a gap is formed between the plurality of coating layers 200, which are beneficial to increase the storage amount of the electrolytic solution at the edge portions, to effectively solve the problem of lithium precipitation at the edge of the negative electrode plate due to the insufficient electrolytic solution. In addition, a total width of the plurality of coating layers 200 is less than the width of the corresponding edge portion, to reduce the amount of the coating material and reduce the production cost. However, the number of the coating layers 200 on each of the edge portions should not be too many, otherwise the processing of the separator is complex, the processing stability is redused, the production cost is increased, and the industrial applicability is decreased.

In some specific embodiments, the number of coating layers 200 on the first edge portion 101, the second edge portion 102, the third edge portion 103, and the fourth edge portion 104, independent of one another, may be 2, 3, 4, or 5.

In some embodiments, according to the first aspect, a seventh embodiment of the first aspect is provided. With reference to FIGS. 6 and 7, the first edge portion 101, the second edge portion 102, the third edge portion 103, and the fourth edge portion 104 each are provided with a plurality of coating layers 200, which are arranged side-by-side at the same coating width and the same interval.

In the above configuration, the arrangement of the coating layers on the edge portions is optimizd such that the coating layers are arranged orderly, regularly, controllably, and uniformly, to improve the processing stability of the separator.

In some embodiments, according to the first aspect, an eighth embodiment of the first aspect is provided. The coating layers 200 are provided at the first edge portion 101 and the second edge portion 102, as shown in FIGS. 4 and 6. Alternatively, the coating layers 200 are provided at the third edge portion 103, and the fourth edge portion 104. Alternatively, the coating layers 200 are provided at the first edge portion 101 and the third edge portion 103. Alternatively, the coating layers 200 are provided at the second edge portion 102 and the fourth edge portion 104. Alternatively, the coating layers 200 are provided at the first edge portion 101, the second edge portion 102, the third edge portion 103, and the fourth edge portion 104, as shown in FIGS. 5 and 7.

In the above configuration, the liquid retention capacity of the battery cell can be improved by optimizing the arrangement of the coating layers.

In some embodiments, according to the first aspect, a ninth embodiment of the first aspect is provided. The coating layer 200 has a thickness ranging from 0.5 µm to 5 µm.

In the above configuration, the liquid retention capacity of the battery cell can be improved by optimizing the thickness of the coating layer. When the coating layer is too thick, the gap between the electrode plates within the battery cell is too large, the transport path of the lithium ions increases significantly, and the kinetics of the lithium ions decreases. When the coating layer is too thin, the edge of the electrode plate has a weak capacity to prevent the electrolytic solution from being squeezed out during the cycle process of the battery cell, the internal liquid retention capacity of the battery cell is low, and the improvement in the cycle lifespan is insignificant.

In some specific embodiments, the thickness of the coating layer 200 may be, for example, 0.5 µm, 1 µm, 1.5 µm, 2 µm, 2.5 µm, 3 µm, 3.5 µm, 4 µm, 4.5 µm, or 5 µm. Alternatively, the thickness of the coating layer 200 may range from 1 µm to 3 µm, 3 µm to 5 µm, or 1.5 µm to 4 µm.

In some embodiments, according to the first aspect, a tenth embodiment of the first aspect is provided. The coating layer 200 is made of at least one of alumina, aramid, polyethylene oxide, polyacrylic acid, polyacrylate, polymethyl acrylate, polyvinylidene fluoride, polymethacrylic acid, polyethylacrylate, polyvinylidene fluoride, hexafluoropropylene copolymer, polypropylene, polyimide, polyacrylonitrile, lithium carboxymethyl cellulose, or styrene-butadiene rubber.

In the above configuration, the material of the coating layer can promote the infiltration of the electrolytic solution into the interior of the battery cell and has good conductivity. Moreover, the material of the coating layer can be excellently combined with the separator, excellently fit with the electrode plates, and improve the liquid retention capacity inside the battery cell.

In some embodiments, according to the first aspect, an eleventh embodiment of the first aspect is provided. A longitudinal sectional shape of the coating layer 200 may be semicircular, square, or rectangular.

Further, the longitudinal sectional shape of the coating layer 200 may be any other shape.

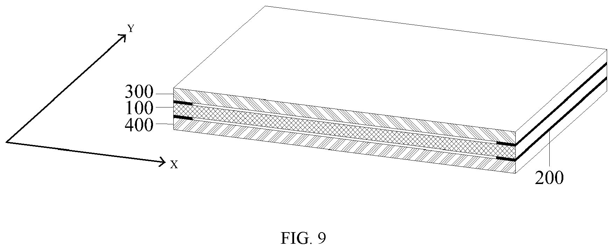

The second aspect of the present disclosure provides a secondary battery. Referring to FIGS. 8 and 9, the secondary battery includes a positive electrode plate 300, a negative electrode plate 400, and the separator described in the first aspect of the present disclosure. The separator is provided between the positive electrode plate 300 and the negative electrode plate 400.

In some specific embodiments, the positive electrode plate 300 includes a positive electrode current collector and a positive material layer provided on at least one surface of the positive electrode current collector. The positive material layer includes a positive active material. The positive material layer may further include a conductive agent and a binder. The type and content of the conductive agent and the binder are not specifically limited, and may be selected in accordance with practical requirements. The positive electrode current collector may be made of a material having good electrical conductivity and mechanical strength, such as aluminum foil, but is not limited thereto.

In some particular embodiments, the negative electrode plate 400 may include a negative electrode current collector and a negative material layer provided on at least one surface of the negative electrode current collector. The negative material layer may include a negative active material. The kind of the negative active material is not specifically limited, and preferably includes at least one selected from a group consisting of graphite, nano-silicon spheres, nano-silicon wires, silicon carbide, silicon oxide, and silicon suboxide. The negative material layer may further include a conductive agent and a binder. The type and content of the conductive agent and the binder are not specifically limited, and may be selected based on practical requirements. The kind of the negative electrode current collector is not specifically limited either, and may be selected based on practical requirements, for example, copper foil.

After the separator and the positive and negative electrode plates are stacked or wound to form a battery cell, a liquid storage structure is formed between the separator and the positive electrode plate and/or between the separator and the negative electrode plate to improve the capacity of storing an electrolytic solution. The coating layer functions as a barrier to prevent the electrolytic solution from being squeezed out and improve the liquid retention capacity of the battery cell. In addition, due to the existence of the liquid storage structure, the expansion stress can be released to an extent during the cycle process of the battery cell, to reduce the extrusion force between the electrode plate and the separator to further reduce the extrusion amount of the electrolytic solution.

In the technical solutions of the embodiments of the present disclosure, since the separator of the first aspect of the present disclosure is used, as shown in FIG. 8, a liquid storage structure 500 is formed between the separator and the positive electrode plate 300 and/or between the separator and the negative electrode plate 400, to improve the storing capacity of the battery cell for an electrolytic solution. The coating layer 200 functions as a barrier to prevent the electrolytic solution from being squeezed out and improve the liquid retention capacity of the battery cell. In addition, due to the presence of the liquid storage structure 500, the expansion stress can be released to an extent during the cycle process of the battery cell, to reduce the extrusion force between the electrode plate and the separator to further reduce the extrusion amount of the electrolytic solution. Therefore, the secondary battery of the present disclosure can reduce the extrusion amount of the electrolytic solution inside the battery cell during the cycle process, and improve the liquid retention capacity of the battery cell.

The third aspect of the present disclosure provides a battery module including the secondary battery of the second aspect of the present disclosure.

In the technical solutions of the embodiments of the present disclosure, since the separator of the first aspect of the present disclosure is used, the battery module of the present disclosure can reduce the extrusion amount of the electrolytic solution inside the battery cell during the cycle process to improve the liquid retention capacity of the battery cell.

The fourth aspect of the present disclosure provides a battery pack including the secondary battery of the second aspect of the present disclosure or the battery module of the third aspect of the present disclosure.

In the technical solutions of the embodiments of the present disclosure, since the separator of the first aspect of the present disclosure is used, the battery pack of the present disclosure can reduce the extrusion amount of the electrolytic solution inside the battery cell during the cycle process to improve the liquid retention capacity of the battery cell.

The fifth aspect of the present disclosure provides an electric device including at least one of the secondary battery of the second aspect of the present disclosure, the battery module of the third aspect of the present disclosure, and the battery pack of the fourth aspect of the present disclosure.

According to some embodiments of the present disclosure, as shown in FIG. 8, the present disclosure provides a secondary battery. The secondary battery includes a positive electrode plate 300, a negative electrode plate 400, and a separator. The separator is provided between the positive electrode plate 300 and the negative electrode plate 400. The separator includes a base film 100 and coating layers 200. The base film 100 has a cuboid structure. The coating layers 200 are provided on the first edge portion 101, the second edge portion 102, the third edge portion 103, and the fourth edge portion 104. The number of coating layers on each of the edge portions is four. The thicknesses of the coating layers each are 4 µm. The coating layers 200 on each of the edge portions are arranged in paraell to each other at the same interval, and each of the coating layers 200 has the same coating width.

According to some embodiments of the present disclosure, as shown in FIG. 9, the present disclosure provides a secondary battery. The secondary battery includes a positive electrode plate 300, a negative electrode plate 400, and a separator. The separator is provided between the positive electrode plate 300 and the negative electrode plate 400. The separator includes a base film 100 and coating layers 200. The base film 100 has a cuboid structure. The coating layers 200 are provided on the first edge portion 101, the second edge portion 102, the third edge portion 103, and the fourth edge portion 104. The number of coating layers on each of the edge portions is one. The widths of the edge portions are equal, and are equal to the width of the coating layer 200. The thicknesses of the coating layers each are 4 µm.

The above description is only preferred embodiments of the present disclosure, and the scope of the present disclosure is not limited thereto. Any technical personnel familiar with the technical field can easily think of changes or replacements within the scope of the technology disclosed in this disclosure, which should be included in the scope of the present disclosure. Accordingly, the scope of the present disclosure shall be determined based on the scope of the claims.

## Claims

1. A separator, **characterized by**:
a base film having an upper surface and a lower surface, the base film having a first direction, the upper surface comprising a first edge portion and a second edge portion in the first direction, and the lower surface comprising a third edge portion and a fourth edge portion in the first direction; and
a coating layer provided at at least one of the first edge portion, the second edge portion, the third edge portion, and the fourth edge portion.

2. The separator according to claim 1, wherein the base film has a cuboid structure when unrolled to be flat, and the first direction is a width direction of the base film.

3. The separator according to claim 2, wherein:
widths of the first edge portion, the second edge portion, the third edge portion, and the fourth edge portion are independent of one another; and
each of the widths of the first edge portion, the second edge portion, the third edge portion, and the fourth edge portion ranges from 1% to 20% of a width of the separator.

4. The separator according to claim 2 or 3, wherein:
the base film further has a second direction, the second direction being a length direction of the base film; and
the coating layer extends in the length direction of the base film, and has a length that is equal to a length of the base film.

5. The separator according to claim 2 or 3, wherein number of the coating layer provided at the first edge portion, the second edge portion, the third edge portion, and the fourth edge portion are independent of one another, the coating layer provided at each of the first edge portion, the second edge portion, the third edge portion, and the fourth edge portion comprises one coating layer.

6. The separator according to claim 5, wherein:
a width of the coating layer provided at the first edge portion is equal to a width of the first edge portion;
a width of the coating layer provided at the second edge portion is equal to a width of the second edge portion;
a width of the coating layer provided at the third edge portion is equal to a width of the third edge portion; and
a width of the coating layer provided at the fourth edge portion is equal to a width of the fourth edge portion.

7. The separator according to claim 2 or 3, wherein:
number of the coating layer provided at the first edge portion, the second edge portion, the third edge portion, and the fourth edge portion are independent of one another, the coating layer provided at each of the first edge portion, the second edge portion, the third edge portion, and the fourth edge portion comprising two to five coating layers; and
the plurality of coating layers provided at each of the first edge portion, the second edge portion, the third edge portion, and the fourth edge portion are arranged side by side in the width direction of the base film and in non-connection with each other.

8. The separator according to claim 7, wherein the plurality of coating layers provided at each of the first edge portion, the second edge portion, the third edge portion and the fourth edge portion are arranged side by side at a same spacing, and each of the plurality of coating layers has a same coating width.

9. The separator according to any one of claims 1 to 3, wherein:
the coating layer is provided at the first edge portion and the second edge portion;
the coating layer is provided at the third edge portion and the fourth edge portion;
the coating layer is provided at the first edge portion and the third edge portion;
the coating layer is provided at the second edge portion and the fourth edge portion; or
the coating layer is provided at the first edge portion, the second edge portion, the third edge portion, and the fourth edge portion.

10. The separator according to any one of claims 1 to 3, wherein the coating layer has a thickness ranging from 0.5 µm to 5 µm.

11. The separator according to any one of claims 1 to 3, wherein the coating layer is made of at least one of alumina, aramid, polyethylene oxide, polyacrylic acid, polyacrylate, polymethyl acrylate, polyvinylidene fluoride, polymethacrylic acid, polyethylacrylate, polyvinylidene fluoride, hexafluoropropylene copolymer, polypropylene, polyimide, polyacrylonitrile, lithium carboxymethyl cellulose, and styrene-butadiene rubber.

12. A secondary battery, comprising:
a positive electrode plate;
a negative electrode plate; and
the separator according to any one of claims 1 to 11, the separator being arranged between the positive electrode plate and the negative electrode plate.

13. A battery module, comprising the secondary battery according to claim 12.

14. A battery pack, comprising the secondary battery according to claim 12 or the battery module according to claim 13.

15. An electric device, comprising at least one of the secondary battery according to claim 12, the battery module according to claim 13, and the battery pack according to claim 14.
